(19) **Europäisches Patentamt**

**European Patent Office**

**Office européen des brevets**

(11) **EP 0 757 074 B1**

(12) **EUROPEAN PATENT SPECIFICATION**

(45) Date of publication and mention
of the grant of the patent:
**20.02.2002   Bulletin 2002/08**

(51) Int Cl.[7]: **C08K 5/05**, C08G 77/16,
C08G 77/18

(21) Application number: **96305350.9**

(22) Date of filing: **22.07.1996**

(54) **Process of stabilising siloxane polymers**

Verfahren zur Stabilisierung von Siloxan-Polymeren

Procédé de stabilisation des polymères de siloxane

(84) Designated Contracting States:
**DE ES FR GB IT**

(30) Priority: **29.07.1995  GB 9515616**

(43) Date of publication of application:
**05.02.1997   Bulletin 1997/06**

(73) Proprietor: **Dow Corning Limited**
**South Glamorgan CF6 7YL Wales (GB)**

(72) Inventors:
  • **Cray, Stephen**
  **Sully, South Glamorgan, Wales (GB)**
  • **Evans, Martin**
  **Porthcawl, Mid Glamorgan, Wales (GB)**
  • **Perrett, Samantha**
  **Taff's Well, Mid Glamorgan, Wales (GB)**
  • **Mackinnon, Iain**
  **Llantwit Major, South Glamorgan, Wales (GB)**

(74) Representative: **Vandamme, Luc Johan Roger**
**Dow Corning Limited Cardiff Road**
**Barry South Glamorgan CF6 7YL Wales (GB)**

(56) References cited:
    **EP-A- 0 314 316**          **US-A- 2 755 261**
    **US-A- 3 575 917**          **US-A- 4 318 939**

  • **DATABASE WPI Derwent Publications Ltd.,**
    **London, GB; AN 87-146910 XP002019313 &**
    **JP-A-62 084 174 (TORAY) , 17 April 1987**

EP 0 757 074 B1

## Description

The invention relates to a process of stabilising siloxane polymers, and in particular stabilising the viscosity of siloxane polymers which have been prepared by condensation polymerisation.

Siloxane polymers made by condensation polymerisation have been known for a long time. They are made by reacting organosilicon compounds, preferably organosiloxanes or organosilanes having silicon-bonded hydroxyl groups with each other or with organosilicon compounds, preferably siloxanes or silanes, having silicon-bonded alkoxy groups, often in the presence of a condensation catalyst. Such catalysts are also known and have been described in a number of patent specifications. The side product of siloxane condensation polymerisation reactions are water (upon reaction of two silicon-bonded hydroxyl groups) or alcohol (upon reaction of a silicon-bonded hydroxyl group with a silicon-bonded alkoxy group). The side products are released when a siloxane bond is formed according to the general reaction (I), wherein R denotes hydrogen or an alkyl group

$$\equiv Si\text{-}OR + HO\text{-}Si\equiv \; \rightarrow \; \equiv Si\text{-}O\text{-}Si\equiv \; + \; ROH \qquad\qquad (I)$$

Siloxane polymers which are made by condensation polymerisation sometimes have a tendency to continue reacting at the end of the manufacturing process, even when the catalyst has been deactivated or removed. This is particularly true for siloxane polymers which have reactive substituents e.g. amine, epoxy or acrylate functional substituents. This tendency is most clearly observed when siloxane materials are present which have amine functional substituents. This continued reaction usually results in an increase of viscosity with time, which may only become apparent upon storage of the product.

EP-A-0475439 discloses higher alkoxy substituted diorganopolysiloxanes and a method of making the same which comprises reacting an organohydrogenpolysiloxane with an aliphatic alcohol having 4 to 30 carbon atoms in the presence of a platinum catalyst and an organic acid.

There is a need for a process by which the viscosity of siloxane materials made by condensation polymerisation can be stabilised, preferably without affecting the efficiency of the polymers in their final applications.

We have now found that by using certain alcohols or substituted alcohols, together referred to as stabilising alcohols in this specification, the viscosity of siloxane polymers made by condensation polymerisation can be stabilised.

According to the invention there is provided a process for stabilising the viscosity of siloxane polymer formed by condensation polymerisation and being of the general formula

$$R''_{3-b}X_b\text{-}SiO\text{-}(R''_2SiO)_n\text{-}SiO\text{-}X_b\text{-}R''_{3-b}$$

wherein R" is a hydrocarbon group or a substituted hydrocarbon group, X is a group R", a hydroxyl group or an alkoxy group with the proviso that X is a hydroxyl group or an alkoxy group at least once per molecule, $\underline{b}$ is 1, 2 or 3, and $\underline{n}$ is an integer with a value such that the viscosity of the siloxane polymer at 25°C is in the range from 1 to 100,000 $mm^2/s$, which process comprises adding an alcohol or substituted alcohol to organo-silicon compounds used to produce the siloxane polymer by condensation polymerisation, the alcohol or substituted alcohol being of the general formula R'OH, wherein R' is a substituted or unsubstituted alkyl group of from 4 to 30 carbon atoms.

The abovementioned "organosilicon compounds used to produce the siloxane polymer by condensation polymerisation" may also be referred to herein as "organosilicon precursors" of the siloxane polymer.

Suitable R" groups include alkyl, alkenyl, aryl, cycloalkyl or groups substituted with amine, amide, ether or epoxy functionality. Preferably R" is an alkyl group having up to 8 carbon atoms, there being at least one R" group per molecule which is a silicon-bonded group having amine substitution, e.g. amino-alkyl. Preferably at least 80% of all R" groups are alkyl group having up to 5 carbon atoms, most preferably almost all R" groups are methyl groups.

Preferably n is an integer with a value such that the viscosity of the siloxane polymer at 25°C is 20 to 60,000 $mm^2/s$, more preferably 50 to 5,000 $mm^2/s$, most preferably 100 to 1,500 $mm^2/s$.

The stabilising alcohol is added prior to or during the polymerisation process, to the organosilicon compounds used to form siloxanes by condensation polymerisation; the viscosity of the resulting siloxane polymer is more stable with time than the viscosity of siloxane polymers which are merely mixed with the stabilising alcohol after the polymerisation reaction is completed, which stabilisation is, however, still a substantial improvement over the polymers without any stabilising alcohol.

The process according to the invention comprises the use of a stabilising alcohol. Suitable alcohols are those of the general formula R'OH, wherein R' is alkyl or a substituted alkyl group having 4 to 30 carbon atoms. Substituted alkyl groups are alkyl groups which have substituted on one of its carbon atoms a functionality which is preferably selected from amino, epoxy or ether functionality. Examples of suitable R' groups include linear and branched alkyl groups, cycloalkyl groups, aminoalkyl groups, alkoxyalkyl groups or polyoxyalkylene alkyl groups, for example n-butyl, iso-butyl, pentyl, hexyl, decyl, dodecyl, stearyl, eicosyl, cyclohexyl, aminoethyl, aminopropyl, methylaminopropyl, aminocyclohexyl, methoxyethyl and alkoxylated polyethyloxy propyl. It is preferred that the R' group is a linear or branched alkyl group or an aminoalkyl group, more preferably a linear or branched alkyl group having from 6 to 20 carbon atoms, e.g. hexyl, most preferably having 8 to 18 carbon atoms, e.g. 2-ethylhexyl, decyl or isostearyl. Particularly useful stabilising alcohols are n-hexanol, n-decanol, 2-ethyl hexanol, isostearyl alcohol and hexanolamine.

Preferred suitable siloxane polymers have units of the general formula (II)

$$SiO_{4-a/2}R''_a \qquad\qquad (II)$$

with $\underline{a}$ having an average value of from 1.6 to 2.3, and may have up to 5% of siloxane units where the average value of $\underline{a}$ is from 2.7 to 3.2, thus causing some branching in the molecule, particularly in the siloxane backbone of the siloxane polymer. The siloxanes which are more easily subject to a variation in viscosity are those where at least one silicon-substituted group has amino-functionality, for example in the shape of a primary amino group.

The stabilising alcohol is added to the organosilicon compounds which are used to make the siloxane polymers by condensation polymerisation prior to or during the actual polymerisation reaction, in particular the stabilising alcohols may be added to the reaction mixture prepared for producing siloxane polymers. Such reaction mixture preferably comprises at least (i) an $\alpha,\omega$,silanol end-blocked polydiorgano-siloxane, (ii) siloxanes having only one terminal silanol group per molecule, or (iii) organosilicon compounds having at least one silicon-bonded alkoxy group per molecule, and in most cases a condensation catalyst

Said $\alpha,\omega$,silanol end-blocked polydiorganosiloxanes are known and are preferably linear siloxane materials having an average viscosity of from 10 to 5000 mm$^2$/s at 25°C, more preferably from 20 to 500 mm$^2$/s, having the average general formula (IV)

$$HO-R''_2SiO-(R''_2SiO)_n- SiR''_2-OH \qquad\qquad (IV)$$

Most preferably these siloxanes are linear polydimethyl siloxanes having dimethyl hydroxyl siloxane end-units.

Siloxane polymers having only one silanol group per molecule are also known and may be similar to the $\alpha,\omega$-silanol end-blocked polydiorganosiloxanes described above, with the main difference that one silicon-bonded hydroxyl group is replaced by a group R''. They can be used to react in the condensation reaction thus causing end-blocking to the condensation polymer, avoiding further chain extension by additional reactions. Organosilicon compounds which may be used are for example silanes or siloxanes, provided they have at least one silicon-bonded alkoxy group, possibly two or three alkoxy groups. Particularly preferred are silanes wherein the alkoxy group(s) have from 1 to 8 carbon atoms, most preferably where they are methoxy or ethoxy. These silanes are particularly useful when they also have silicone-bonded substituents with reactive groups, e.g. amino, epoxy or ether containing groups. Examples of suitable silanes include dimethylmethoxy-aminopropyl silane, methyldimethoxy-aminoethylaminopropyl silane, polyoxyethylene substituted dimethylethoxy silane, glycidoxypropyldimehtylmethoxy silane, trimethoxy aminopropylsilane, methyldimethoxy aminopropylsilane and trimethoxy aminoethylaminopropylsilane. Silanes where 3 silicon-bonded alkoxy groups are present, are particularly useful, as they tend to be more reactive, and may even avoid the need to add a condensation catalyst.

Condensation catalysts which are useful are well known and include among many others, acid or alkali catalysts, e.g. sodium dodecyl benzene sulphonate, HCl, alkali catalysts, KOH, barium hydroxide, sodium phosphate, potassium tetraborate and mixtures of one or more of these.

In another aspect of the invention there is provided a process for making siloxane polymers which process comprises condensation of (i) $\alpha,\omega$,silanol end-blocked polydiorganosiloxanes, (ii) siloxanes having only one silicon-bonded hydroxyl group, or (iii) organo-silicon compounds having at least one silicon-bonded alkoxy group in the presence of a substituted or unsubstituted alcohol of the general formula R'OH, wherein R' is a substituted or unsubstituted alkyl group of from 4 to 30 carbon atoms.

The ingredients used in this process according to the invention have been described above and are used in amounts which can vary according to the required siloxane polymer. For example the higher the viscosity requirement of the siloxane polymer, the higher the proportion of the $\alpha,\omega$,silanol end-blocked polydiorganosiloxanes in the reaction mixture, and the lower the viscosity of the required siloxane polymer, the higher the amount of siloxanes or organosilicon compounds having only one silicon-bonded condensable group, e.g. silanol or silicon-bonded alkoxy group, which are known as end-blockers. If polymers are desired which have a higher level of functionality, e.g. number of siloxane units with an amino-functional substituent, then the number of organosilicon compounds (e.g. amino-functional silanes) will be increased. The presence of a catalyst will depend very much on the reactivity of the reagents and the time allowed for the reaction to take place, as further explained below. The amount of catalyst used will also depend on the catalytic efficiency of the catalyst and may vary from 0.001% to 5% by weight of the total weight of the reaction mixture, preferably from 0.01 to 2%. Particularly preferred are those condensation catalysts which are transient, i.e. which can be deactivated at the end of the reaction, e.g. by thermal decomposition or catalyst which are fixed to a support, and can be easily removed from the reaction mixture, e.g. by filtration.

The reaction may be carried out at room temperature, in which case the reaction mixture preferably comprises, apart from the stabilising alcohol, $\alpha,\omega$,silanol end-blocked polydiorganosiloxanes and organosilicon compounds having 2 or 3 silicon-bonded alkoxy groups, preferably 3. In this case no catalyst is required as the mixture may be left at room temperature for several hours, e.g. 24 to 72 hours, for the reaction to take place.

The reaction is, however, preferably carried out at elevated temperatures, at least sufficient to evaporate the by-products of the condensation reaction, i.e. water and/or lower alcohols, e.g. 50 to 120°C, more preferably 60 to 100°C. The removal may be aided by the use of reduced pressure to strip off the more volatile condensation by-products, thus encouraging the reaction of the stabilising alcohols into the siloxane polymers. Polymers made by a process according to the present invention at elevated temperature tend to have a better stability of viscosity than those made at room temperature.

The amount of alcohol used in the process of the invention may vary from 0.1 to 15% by weight based on the amount of siloxane polymer formed by condensation or the amount of $\alpha,\omega$,silanol end-blocked polydiorganosiloxanes in the reaction mixture, preferably 1 to 10%, more preferably 2 to 8%. It is preferred where the stabilising alcohol is mixed with the reagents prior to the condensation reaction that the amount is from 2 to 12%. Higher amounts are possible, but do not bring any additional benefits. It is the aim to add an amount of stabilising alcohol which will give approximately a 1/1 molar ratio, or a small excess thereof, of alcoholic hydroxyl groups to the number of hydrolysable groups which would be present in the final siloxane polymer obtained by condensation polymerisation, were the stabilising alcohol not present. It follows that a higher weight level of stabilising alcohol is required when alcohols with a higher molecular weight are used to give the same number of alcoholic hydroxyl groups.

The resulting reaction products of the process according to the invention are siloxane polymers which are more stable with regard to viscosity variation than polymers which are made or provided without any stabilising alcohol. Stability of viscosity may result in a viscosity which is constant for an indefinite time, but more likely will result in an slowing down of the viscosity increase, and thus an increase in the shelf life of the product.

The polymer obtained, or the mixture provided by the process according to the present invention may be provided as a homogeneous liquid composition, or as an emulsion. The polymer or mixture comprises either purely the siloxane polymer or a mixture thereof with some unreacted components from the reaction mixture and/or some by-products. Preferably the reaction product consists of pure condensation polymer where the stabilising alcohol is largely reacted into the polymer.

Emulsions of the polymer or mixture may be provided according to standard emulsification techniques and can be macroemulsions or microemulsions. Compositions comprising the product of the process according to the present invention are useful in a number of applications, particularly for textile treating agents. Siloxane polymers having amino-functionality which are made by a process according to the present invention are particularly useful for providing softening to textile fibres. These compositions may be used by themselves or may be mixed with other ingredients, e.g. dyes, colorants, crease resist resins, fragrants and other known textile treatments. The compositions may be applied to textiles in any known way, but preferably are applied by padding or exhaustion processes.

There now follow a number of examples in which all parts and percentages are by weight, unless otherwise stated and all viscosities are given at 25°C and normal atmospheric pressure.

Examples 1 & 2 and Comparative Example C1

In a flask was prepared a first composition by mixing 376g of an $\alpha,\omega$-silanol end-blocked polydimethylsiloxane having an average molecular weight of about 3000 and a viscosity of 70mm$^2$/s, 24g of aminoethylaminopropyl trimethoxy silane, together with 25.5g of isostearyl alcohol. The mixture was stirred and kept at 20°C for a period of 96 hours, after which it was found to have a viscosity of 264 mm$^2$/s. A second composition was prepared, using instead of the isostearyl alcohol 8.2g of n-hexanol. This composition was found to have a viscosity of 268 mm$^2$/s. Both compositions were emulsified after 2 days to give a stable, microemulsion. The microemulsions were prepared by blending 75g of the composition prepared above with 15g of Softanol® 50, 30g of Softanol® 70 and 36g of water, which was later diluted with 342.75g of water in stages. After 1.25g of acetic acid was added the emulsion was stirred and found to be stable. A composition similar to the one described in Example 1 was prepared as comparative example by leaving out the isostearyl alcohol altogether. The viscosity of the mixture was measured over a period of 35 days and results are given below in Table I.

TABLE I

| Example | Viscosity after number of days (mm$^2$/s) | | | | | | | |
|---|---|---|---|---|---|---|---|---|
| | 0 | 1 | 5 | 6 | 15 | 20 | 29 | 34 |
| 1 | 57 | 104 | 264 | - | - | 535 | - | 1142 |
| 2 | 57 | 100 | 268 | - | - | 614 | - | 1536 |
| C1 | 57 | 132 | - | 365 | 624 | - | 2015 | - |

Examples 3 to 15 and Comparative Example C2

In a flask, provided with heating mantle, nitrogen blanket, dropping funnel, thermometer and stirrer, were mixed 567g of a $\alpha,\omega$-silanol end-blocked polydimethyl-siloxane having an average molecular weight of about 3,500, and a viscosity of 70 mm$^2$/s, 34g of aminoethyl- aminopropyl methyldimethoxy silane, together with x % of a stabilising alcohol (Y; isostearyl alcohol: ISA; N-hexanol: HEX; 2-ethyl-hexanol: ETH), based on the weight of the total formulation and 0.1% by weight based on the total weight of the mixture of a 25/75 mixture of Na$_3$PO$_4$ and Ba(OH)$_2$. The reaction mixture was stirred and heated to 85°C for 8 hours under a pressure of 200 mBar. The resulting polymer was tested at regular intervals for viscosity, and details are given in Table II below, together with those of a Comparative Example (C2), which was made using the same process parameters but excluding the presence of a stabilising alcohol.

TABLE II

| Example | Y (%) | Viscosity after number of hours reaction (in mm$^2$/s) | | | | |
|---|---|---|---|---|---|---|
| | | 1 | 2 | 3 | 4 | 5 |
| 3 | HEX (2) | 1000 | 1200 | 1250 | 1250 | 1250 |
| 4 | HEX (5) | 300 | 300 | 310 | 320 | 320 |
| 5 | HEX (10) | 150 | 150 | 150 | 150 | 150 |
| 6 | ETH (1.25) | 1400 | 2500 | 3000 | 3450 | - |
| 7 | ETH (2) | 1250 | 2000 | 2500 | 2550 | - |
| 8 | ETH (2.25) | 900 | 1300 | 1300 | 1300 | - |
| 9 | ETH (3) | 700 | 1100 | 1200 | 1200 | - |
| 10 | ETH (3.5) | 700 | 1100 | 1100 | 1100 | - |
| 11 | ISA (3) | 1000 | 2000 | 2250 | 2400 | - |
| 12 | ISA (4) | 600 | 1350 | 1800 | 2200 | - |
| 13 | ISA (5.3) | 500 | 1100 | 1200 | 1200 | - |
| 14 | ISA (6.2) | 300 | 700 | 800 | 800 | - |
| 15 | ISA (7.1) | 300 | 600 | 650 | 650 | - |
| C2 | - | 4580 | 10382 | 13840 | 19217 | - |

The compositions of Examples 3 to 15 were also prepared as microemulsions by blending 15 parts of the composition prepared above with 3 parts of Softanol® 50, 6 parts of Softanol® 70 and 7 parts of water, which was later diluted with 68.75 parts of water in stages. After 0.25 parts of acetic acid was added, the emulsion was stirred and found to be stable and clear.

**Claims**

1. A process for stabilising the viscosity of siloxane polymer formed by condensation polymerisation which process comprises adding a substituted or unsubstituted alcohol to organo-silicon compounds used to produce the siloxane polymer by condensation polymerisation, the alcohol being of the general formula R'OH, wherein R' is a substituted or unsubstituted alkyl group of from 4 to 30 carbon atoms, **characterised in that** the siloxane polymer is of the general formula

$$R''_{3-b}X_b\text{-SiO-}(R''_2\text{SiO})_n\text{- SiO-}X_b\text{-}R''_{3-b}$$

wherein R" is a hydrocarbon group or a substituted hydrocarbon group, X is a group R", a hydroxyl group or an alkoxy group with the proviso that at least one X per molecule is a hydroxyl group or an alkoxy group, b is 1, 2 or 3, and n is an integer with a value such that the viscosity of the siloxane polymer at 25°C is in the range from 1 to 100,000 mm$^2$/s, the alcohol is added prior to or during the polymerisation process, and the product is optionally provided as a homogeneous fluid or an emulsion.

2. A process according to claim 1 **characterised in that** R' is selected from linear and branched alkyl groups, cycloalkyl groups, aminoalkyl groups, alkoxyalkyl groups or polyoxyalkylene alkyl groups.

3. A process according to claim 1 or 2 **characterised in that** R' is selected from n-butyl, iso-butyl, pentyl, hexyl, decyl, dodecyl, stearyl, eicosyl, cyclohexyl, aminoethyl, aminopropyl, methylaminopropyl, aminocyclohexyl, methoxyethyl or alkoxylated polyethyloxy propyl, or **in that** R'OH is selected from n-hexanol, n-decanol, 2-ethyl hexanol, isostearyl alcohol or hexanolamine.

4. A process according to claim 1, 2 or 3 **characterised in that** up to 5% of siloxane units of the siloxane polymer formed by condensation polymerisation cause some branching in the siloxane backbone of the siloxane polymer.

5. A process according to any one of the preceding claims **characterised in that** the organosilicon compounds which are used to produce the siloxane polymers by condensation polymerisation comprise (i) $\alpha,\omega$,silanol end-blocked polydiorgano-siloxane, (ii) siloxane having only one terminal silanol group per molecule, or (iii) organosilicon compounds having at least one silicon-bonded alkoxy group per molecule.

6. A process according to Claim 5 **characterised in that** the $\alpha,\omega$,silanol end-blocked polydiorganosiloxane is a linear siloxane having an average viscosity of from 10 to 5000 mm$^2$/s at 25°C and having the average general formula

$$HO-R''_2SiO-(R''_2SiO)_n- SiR''_2-OH$$

wherein R" and n are as defined in Claim 1.

7. A process according to Claim 5 **characterised in that** the organosilicon compounds are silanes having silicon-bonded substituents with reactive groups selected from amino, epoxy and ether containing groups.

8. A process according to Claim 7 **characterised in that** the silanes are selected from dimethylmethoxy-aminopropyl silane, methyldimethoxy-aminoethylaminopropyl silane, polyoxyethylene substituted dimethylethoxy silane, glycidoxypropyldimethylmethoxy silane, trimethoxy-aminopropylsilane, methyldimethoxy-aminopropylsilane and trimethoxyaminoethylaminopropylsilane.

9. A process for making siloxane polymers which process comprises condensation of organosilicon compounds in the presence of a substituted or unsubstituted alcohol of the general formula R'OH, wherein R' is a substituted or unsubstituted alkyl group of from 4 to 30 carbon atoms, **characterised in that** the organosilicon compounds comprise

(i) $\alpha,\omega$,silanol end-blocked polydiorganosiloxanes, (ii) siloxane having only one silicon-bonded hydroxyl group or
(iii) organo-silicon compounds having at least one silicon-bonded alkoxy group, and the product is optionally provided as a homogeneous fluid or an emulsion.

10. A process according to Claim 9 **characterised in that** it is carried out at elevated temperature at least sufficient to evaporate the by-products from the condensation reaction.

11. A process according to any preceding claim **characterised in that** the amount of alcohol used is from 0.1 to 15% by weight based on the amount of siloxane polymer formed by condensation or the amount of $\alpha,\omega$,silanol end-blocked polydiorganosiloxanes in the reaction mixture.

**Patentansprüche**

1. Verfahren zur Stabilisierung der Viskosität eines durch Kondensationspolymerisation gebildeten Siloxanpolymers, wobei das Verfahren die Zugabe eines substituierten oder nicht substituierten Alkohols zu den zur Herstellung des Siloxanpolymers durch Kondensationspolymerisation verwendeten Organosiliciumverbindungen umfasst, wobei der Alkohol der allgemeinen Formel R'OH genügt, wobei R' für eine substituierte oder nicht substituierte Alkylgruppe mit 4 bis 30 Kohlenstoffatomen steht, **dadurch gekennzeichnet, dass** das Siloxanpolymer der allgemeinen Formel

$$R''_{3-b}X_b\text{-SiO-}(R''_2SiO)_n\text{-SiO-}X_b\text{-}R''_{3-b}$$

genügt, wobei R'' für eine Kohlenwasserstoffgruppe oder eine substituierte Kohlenwasserstoffgruppe steht, X eine Gruppe R'', eine Hydroxylgruppe oder eine Alkoxygruppe bedeutet, wobei gilt, dass mindestens ein Rest X pro Molekül eine Hydroxygruppe oder eine Alkoxygruppe ist, b für 1, 2 oder 3 steht und n für ein ganze Zahl mit einem derartigen Wert steht, dass die Viskosität des Siloxanpolymers bei 25°C in einem Bereich von 1 bis 100.000 $mm^2$/s liegt, wobei der Alkohol vor oder während des Polymerisationsverfahrens zugegeben wird und das Produkt gegebenenfalls in Form eines homogenen Fluidums oder einer Emulsion bereitgestellt wird.

2. Verfahren nach Anspruch 1, **dadurch gekennzeichnet, dass** der Rest R' aus lincaron und verzweigten Alkylgruppen, Cycloalkylgruppen, Aminoalkylgruppen. Alkoxyalkylgruppen oder Polyoxyalkylonalkylgruppen ausgewählt ist.

3. Verfahren nach Anspruch 1 oder 2, **dadurch gekennzeichnet, dass** der Rost R' aus n-Butyl, Isobutyl, Pentyl, Hexyl, Decyl, Dodecyl, Stearyl, Eicosyl, Cyclohexyl, Aminoethyl, Aminopropyl, Methylaminopropyl, Aminocyclohexyl, Methoxyethyl oder alkoxyliertem Polyethyloxypropyl ausgewählt ist, oder dadurch, dass R'OH aus n-Hexanol, n-Decanol, 2-Ethylhexanol, Isostearylalkohol oder Hexanolamin ausgewählt ist.

4. Verfahren nach Anspruch 1,2 oder 3, **dadurch gekennzeichnet, dass** bis zu 5% der Siloxaneinheiten des durch Kondensationspolymerisation gebildeten Siloxanpolymers für eine gewisse Verzweigung in dem Siloxangerüst des Siloxanpolymers sorgen.

5. Verfahren nach einem der vorhergehenden Ansprüche, **dadurch gekennzeichnet, dass** die Organosiliciumverbindungen, die zur Herstellung der Siloxanpolymere durch Kondensationspolymerisation verwendet werden, (i) ein α,ω-silanolendblockiertes Polydiorganosiloxan, (ii) ein Siloxan mit nur einer terminalen Silanolgruppe pro Molekül, oder (iii) Organosiliciumverbindungen mit mindestens einer siliciumgobundenen Alkoxygruppe pro Molekül umfassen.

6. Verfahren nach Anspruch 5, **dadurch gekennzeichnet, dass** das α,ω-silanolendblockierte Polydiorganosiloxan ein lineares Siloxan mit einer mittleren Viskosität im Bereich von 10 bis 5000 $mm^2$/s bei 25°C der durchschnittlichen allgemeinen Formel

$$HO\text{-}R''_2SiO\text{-}(R''_2SiO)_n\text{-}SiR''_2\text{-}OH$$

wobei R'' und n die oben in Anspruch 1 angegebene Bedeutung besitzen, ist.

7. Verfahren nach Anspruch 5, **dadurch gekennzeichnet, dass** die Organosiliciumverbindungen Silane mit siliciumgcbundenen Substituenten mit reaktiven Gruppen, die aus amino-, epoxy- und etherhaltigen Gruppen ausgewählt sind, sind.

8. Verfahren nach Anspruch 7, **dadurch gekennzeichnet, dass** die Silane aus Dimethylmethoxy-aminopropyl-silan, Mothyldimethoxy-aminoethylaminopropyl-silan, einem polyoxyethylen-substituierten Dimethylethoxysilan, Glycidoxypropyldimethyl-methoxy-silan, Trimethoxy-aminopropylsilan, Methyldimethoxy-aminopropylsilan und Trimethoxy-aminoethylaminopropylsilan ausgewählt ist.

9. Verfahren zur Herstellung von Siloxanpolymeren durch Kondensation von Organosiliciumverbindungen in Gegenwart eines substituierten oder nicht substituierten Alkohols der allgemeinen Formel R'OH, wobei R' für eine substituierte oder nicht substituierte Alkylgruppe mit 4 bis 30 Kohlenstoffatomen steht, **dadurch gekennzeichnet, dass** die Organosiliciumverbindungen (i) $\alpha,\omega$-silanolendblockierte Polydiorganosiloxane, (ii) ein Siloxan mit nur einer siliciumgebundenen Hydroxylgruppe, oder (iii) Organosiliciumverbindungen mit mindestens einer siliciumgebundenen Alkoxygruppe pro Molekül umfassen und das Produkt gegebenenfalls in Form eines homogenen Fluidums oder einer Emulsion bereitgestellt wird.

10. Verfahren nach Anspruch 9, **dadurch gekennzeichnet, dass** es bei erhöhler Tomperatur durchgeführt wird, die mindestens ausreicht, so dass die Nebenprodukte aus der Kondensationsreaktion abgedampft werden.

11. Verfahren nach einem der vorhergehenden Ansprüche, **dadurch gekennzeichnet, dass** die verwendete Alkoholmenge 0,1 bis 15 Gew.-%, bezogen auf die Menge des durch Kondensation gebildeten Siloxanpolymers oder die Menge der $\alpha,\omega$-silanolendblockierten Polydiorganosiloxane in dem Reaktionsgemisch, beträgt.

**Revendications**

1. Procédé pour stabiliser la viscosité d'un polymère de siloxane formé par polymérisation par condensation, ce procédé comprenant l'addition d'un alcool substitué ou non substitué à des composés organosiliciés utilisés pour produire le polymère de siloxane par polymérisation par condensation, l'alcool étant de la formule générale R'OH, où R' est un groupe alkyle substitué ou non substitué de 4 à 30 atomes de carbone, **caractérisé en ce que** le polymère de siloxane a la formule générale

$$R''_{3-b}X_b\text{-SiO-}(R''_2SiO)_n\text{-SiO-}X_b\text{-}R''_{3-b}$$

où R'' est un groupe hydrocarboné ou un groupe hydrocarboné substitué, X est un groupe R'', un groupe hydroxyle ou un groupe alcoxy, étant entendu qu'au moins un X par molécule est un groupe hydroxyle ou un groupe alcoxy, $\underline{b}$ est 1, 2 ou 3 et $\underline{n}$ est un entier avec une valeur telle que la viscosité du polymère de siloxane à 25 °C est dans la gamme de 1 à 100 000 $mm^2/s$, l'alcool est ajouté avant ou pendant le traitement de polymérisation, et le produit est éventuellement fourni sous la forme d'un fluide homogène ou d'une émulsion.

2. Procédé selon la revendication 1, **caractérisé en ce que** R' est choisi parmi les groupes alkyles linéaires et ramifiés, les groupes cycloalkyles, les groupes amino-alkyles, les groupes alcoxyalkyles ou les groupes polyoxyalkylène alkyles.

3. Procédé selon la revendication 1 ou 2,
**caractérisé en ce que** R' est choisi parmi les groupes n-butyle, isobutyle, pentyle, hexyle, décyle, dodécyle, stéaryle, eicosyle, cyclohexyle, aminoéthyle, aminopropyle, méthylaminopropyle, aminocyclohexyle, méthoxyéthyle ou polyéthyloxy propyle alcoxylé, ou **en ce que** R'OH est choisi parmi le n-hexanol, le n-décanol, le 2-éthylhexanol, l'alcool isostéarylique ou l'hexanolamine.

4. Procédé selon la revendication 1, 2 ou 3,
**caractérisé en ce que** jusqu'à 5 % des motifs siloxanes du polymère de siloxane formé par polymérisation par condensation provoquent une certaine ramification dans le squelette siloxane du polymère de siloxane.

5. Procédé selon l'une quelconque des revendications précédentes, **caractérisé en ce que** les composés organosiliciés qui sont utilisés pour produire les polymères de siloxane par polymérisation par condensation comprennent (i) un polydiorganosiloxane bloqué terminalement par des groupes $\alpha,\omega$-silanols, (ii) un siloxane ayant seulement un groupe silanol terminal par molécule ou (iii) des composés organosiliciés ayant au moins un groupe alcoxy lié au silicium par molécule.

6. Procédé selon la revendication 5, **caractérisé en ce que** le polydiorganosiloxane bloqué terminalement par des groupes $\alpha,\omega$-silanols est un siloxane linéaire ayant une viscosité moyenne de 10 à 5000 $mm^2/s$ à 25 °C et ayant la formule générale moyenne

$$HO\text{-}R''_2SiO\text{-}(R''_2SiO)_n\text{-}SiR''_2\text{-}OH$$

où R" et n sont tels que définis dans la revendication 1.

7. Procédé selon la revendication 5, **caractérisé en ce que** les composés organosiliciés sont des silanes ayant des substituants liés au silicium ayant des groupes réactifs choisis parmi les groupes contenant des groupes amino, époxy et éthers.

8. Procédé selon la revendication 7, **caractérisé en ce que** les silanes sont choisis parmi le diméthylméthoxy-aminopropyl silane, le méthyldiméthoxyaminoéthylaminopropylsilane, le diméthyléthoxy silane substitué par un groupe polyoxyéthylène, le glycidoxypropyldiméthylméthoxy silane, le triméthoxyaminopropylsilane, le méthyldiméthoxyaminopropylsilane et le triméthoxyaminoéthylaminopropylsilane.

9. Procédé pour préparer des polymères de siloxane, ce procédé comprenant la condensation de composés organosiliciés en présence d'un alcool substitué ou non substitué de la formule générale R'OH, où R' est un groupe alkyle substitué ou non substitué de 4 à 30 atomes de carbone, **caractérisé en ce que** les composés organosiliciés comprennent (i) des polydiorganosiloxanes bloqués terminalement par des groupes $\alpha,\omega$-silanols, (ii) un siloxane ayant seulement un groupe hydroxyle lié au silicium ou (iii) des composés organosiliciés ayant au moins un groupe alcoxy lié au silicium, et le produit est éventuellement fourni sous la forme d'un fluide homogène ou d'une émulsion.

10. Procédé selon la revendication 9, **caractérisé en ce qu'**il est mis en oeuvre à une température élevée au moins suffisante pour évaporer les sous-produits de la réaction de condensation.

11. Procédé selon l'une quelconque des revendications précédentes, **caractérisé en ce que** la quantité d'alcool utilisée est de 0,1 à 15 % en poids par rapport à la quantité de polymère de siloxane formé par condensation ou la quantité de polydiorganosiloxanes bloqués terminalement par des groupes $\alpha,\omega$-silanols dans le mélange réactionnel.